# EUROPEAN PATENT APPLICATION

(11) **EP 0 851 178 A1**
(43) Date of publication of application: **01.07.1998**
(21) Application number: 97122705.3
(22) Date of filing: 22.12.1997
(51) Int. Cl.: F24F 7/00, A45B 23/00

(54) **Self-powered ventilation device for protecting outdoor spaces from the sun**

(30) Priority: 23.12.1996 IT MI962733; 23.12.1996 IT MI962734
(71) Applicant: B.I. S.r.l., 20131 Milano (IT)
(72) Inventor: Zamarin, Augusto, 20133 Milan (IT); Zamarin, Giorgio Augusto, 20131 Milan (IT)
(74) Representative: Modiano, Guido, Dr.-Ing.

(57) **Abstract**

A self-powered ventilation device, particularly for outdoor spaces, sunshades, heaters and the like, comprising a base body (1;102;103a) and a tubular post (4;28;106;106a) covered by a covering hood (9), further comprising at least one fan (11;26;111a) of the multiple-speed type, enclosed within a cage-like supporting head (10;109;109a) which is peripherally provided with a protective wire gauze and with a tubular connection for detachable coupling to the end of said post, said fan having a motor which is powered autonomously.

## Description

The present invention relates to a self-powered ventilation device which can be coupled as a replacement directly at the end of the post-shaped support of conventional liquefied-gas (LPG) irradiation heaters and can also be coupled to sunshades and the like for protecting outdoor spaces, such as verandas, terraces, gardens and the like, from the sun.

It is well-known that outdoor spaces such as terraces, gardens, verandas and open-air restaurants are currently heated, during certain periods of the year, by using an LPG heating system which is capable of diffusing heat by irradiation over an area which is rather small, for example approximately 15 square meters, but is in any case sufficient to maintain a constant temperature which is sufficient for example to allow the open-air activity of restaurants or to allow gatherings of people in a garden or on private terraces even in autumn and in spring, i.e., at the onset of the first low temperatures.

These gas-fired heaters are generally compact, easy to move and aesthetically pleasant: in practice, they are constituted by a box-like supporting body, with an openable door or the like, inside which a conventional cylinder of LPG is placed, and by a tubular post which rises vertically from the supporting body and supports, at its upper free end, a heating head which is constituted by a generally cage-like body which contains a gas burner capable of emitting heat by irradiation; inside the post there is provided a pipe made of copper or the like which is meant to connect the burner to the expansion valve that is associated with the cylinder. The head provided with the burner is also peripherally provided with a protective wire gauze and, in an upward region, with a metal dome or cover which has the purpose of directing the heat downward, preventing its upward loss.

In these burners, the head fitted with the burner and the corresponding dome is applied by insertion at the upper end of the post and can therefore be easily detached from the post when required; likewise, the gas cylinder can be easily removed from the box-like support for replacement by opening the door of said box-like support.

The aim of the present invention is to utilize the particular supporting structure of these conventional heaters to simply and quickly obtain a device having an entirely different and highly useful function which is also usable in outdoor spaces but in other periods of the year, particularly sunny ones.

Within the scope of this aim, an object of the present invention is to provide a ventilation device which can be applied to the post of sunshades and awnings of any shape and size.

Another object of the present invention is to provide an aeration and/or ventilation device for outdoor spaces and the like which is powered either autonomously or by mains electricity according to requirements and to the location of the device and without requiring particular and/or complex operations.

Another object of the present invention is to provide a ventilation device for protection against the sun which is structurally simple, compact and economical.

This aim, these objects and others which will become apparent hereinafter are achieved by a ventilation device for outdoor spaces, sunshades, heaters and the like, comprising a base body and a tubular post covered by a covering hood, characterized in that it comprises at least one fan of the multiple-speed type, enclosed within a cage-like supporting head which is peripherally provided with a protective wire gauze and with a tubular connection for detachable coupling to the end of said post, said fan having a motor which is powered autonomously.

More particularly, the removable head that contains the fan has, in an upward region, a conventional hood or sunshade canopy or the like for protection against the sun and is provided, in a downward region, with at least one mosquito and fly control device.

A multiple-section switch is furthermore provided on the supporting structure and preferably on the tubular post that supports the ventilation device in order to vary the speeds of the fan; said switch is associated with magnetothermal safety fuses and said switch and associated fuses act on the wires that connect the battery and/or solar panel and the fan, which are inserted in the tubular post, the internal wire including at least one socket for household appliances such as portable telephones, radio sets and the like.

Further characteristics and advantages of the present invention will become apparent from the following detailed description thereof, given with reference to the accompanying drawings, which are provided merely by way of non-limitative example and wherein:
figure 1 is a partially sectional view of a conventional gas-fired heater on which the ventilation device according to the present invention can be applied;
figure 1a is a view of the heating head of the device of figure 1, separated from the support;
figure 2 is a partially sectional view of a first embodiment of the present invention, i.e., a head with a fan which is powered by an electric battery;
figure 3 is a view of a second embodiment according to the present invention, i.e., a head with a fan which is powered autonomously by a solar panel;
figure 4 is a view of a ventilation device which is powered by the electric mains;
figure 5 is a sectional view, taken along a longitudinal median plane, of an self-powered ventilation device for sunshades, executed according to a first preferred embodiment of the present invention;
figure 6 is a view of the ventilation device of figure 5, shown without the solar panel;
figure 7 is a schematic view of a ventilation device for sunshades and the like with an AC fan which is powered directly by the mains; and
figures 8, 9 and 10 are views of three further different embodiments of a ventilation device which is also within the scope of the present invention.

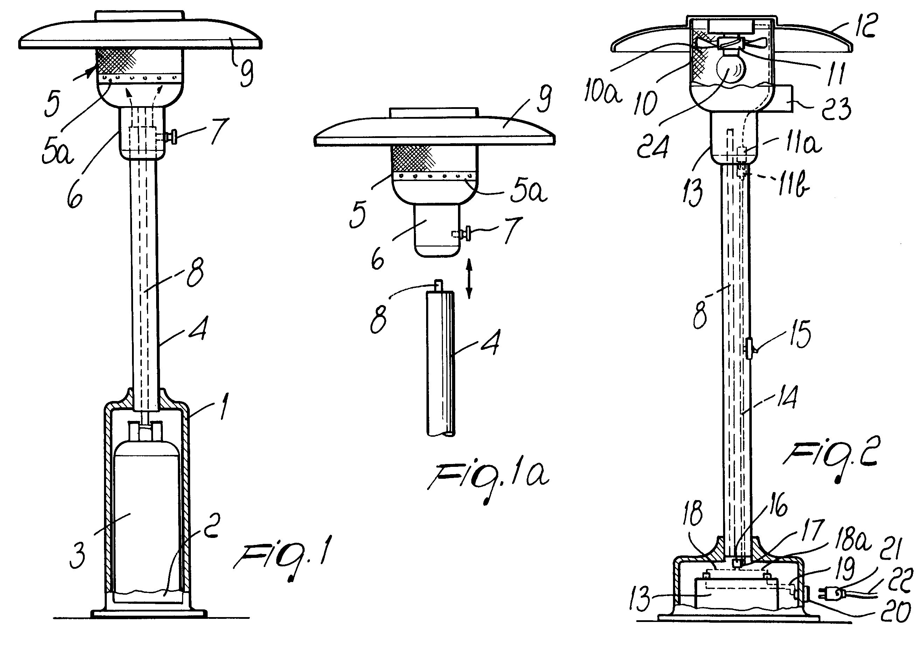

With reference to the above figures, and particularly to figures 1 and 1a, a conventional heater with heat emission by irradiation is constituted by a substantially cylindrical supporting body 1 which can be opened for example by means of a door and inside which a cylinder 3 of liquefied gas (LPG) is placed. A tubular post 4 is rigidly connected to said supporting body, and a cage-like head or the like 5 is detachably anchored to the free top end of said post and encloses a gas-fired or electric burner 5a which is protected by a peripheral wire gauze. The coupling of the head 5 to the post 4 is provided by insertion at the end of the post in a tubular sleeve 6 which protrudes from the bottom of the head and by locking by means of screws or the like 7. A pipe 8, generally made of copper, is inserted in the tubular post 4 and hermetically connects the conventional expansion valve, which is rigidly coupled to the cylinder, to the gas burner 5a. The head 5 can also be constituted by one or more electric resistors powered by a battery.

The heating head 5 is also protected by a hood or cap 9 suitable to avoid upward loss of heat.

For the sake of greater clarity, figure 1a shows the heating head 5 separated from the post 4.

Accordingly, by removing the screw or screws 7 the head 5 disengages from the post 4 and the copper pipe slips out of the base of said head. The head 5 can be removed and so can the cylinder 3 when it must be replaced.

The possibility to extract the head 5 and to remove/insert the cylinder allows to convert, according to various embodiments, all of which are within the scope of the present invention, the above-described heating device into a ventilation device which is particularly useful especially when used outdoors, as specified above.

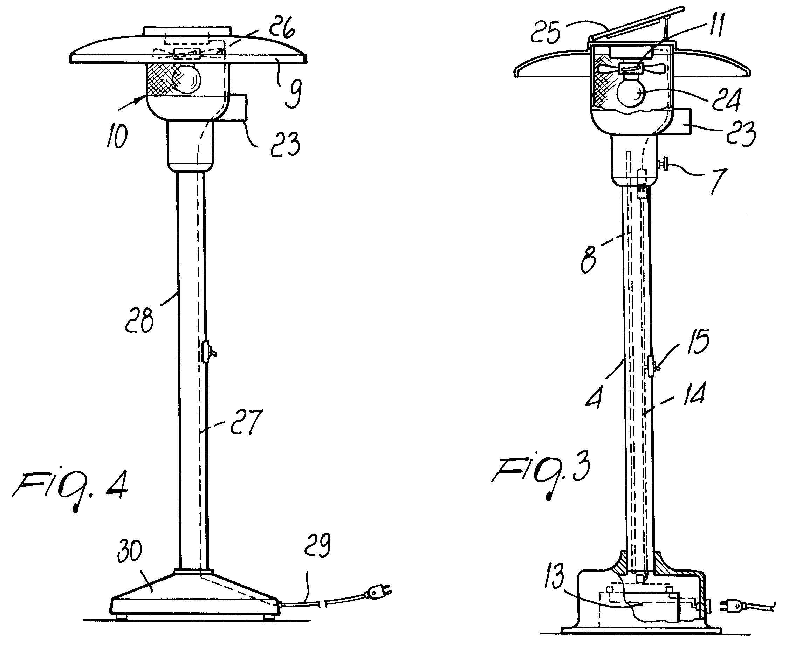

The self-powered ventilation device according to the present invention is in fact constituted, according to a first practical embodiment shown in figure 2, by a cage-like head 10 inside which at least one fan 11 of the multiple-speed DC type is anchored; the cage is protected peripherally by a conventional wire gauze and can be provided, in an upward region, with a hood 12 made of plastic-coated metal, rigid plastics or the like.

A sleeve 53 is anchored to the base of the cage-like head 10 and has such a diameter that it can be easily fitted on the end of the post 4 of the conventional device of figure 1, naturally after removing the head 5 with the burner 5a from the post 4, as mentioned earlier; moreover, one or more rechargeable batteries 13 are accommodated in the box-like base body of the conventional device; the battery or batteries can be detachably connected to the fan 11 by means of electric wires 14 with the interposition of a combined switch and speed variator 15 and related electrothermal safety fuses.

The battery 13 can be connected to the two terminals of the insulated conductor 14 by means of a plug 16 which is rigidly coupled to the conductor 14 and can be inserted in a socket 17 which can be connected by means of wires 18-18a to the terminals of the battery. The battery is also provided with other wires 19 which are rigidly coupled to a socket 20 located outside the base body 1 and suitable to be in turn connected, by means of a plug 21 and an external cord 22, to a battery charger which is powered by the electric mains.

The fan 11 can instead be connected to the wire 14, located inside the post, by means of a wire and a plug 11a which can be inserted in the socket 11b.

Finally, the above-described ventilation device can be provided with a conventional electrical device 23 for producing violet radiation or the like to attract and destroy mosquitoes, flies and similar insects, and with a lamp 24 and other sockets on the post for connecting household appliances, such as cordless telephones, radio sets and the like.

This device therefore operates independently and continuously, since battery recharging allows to operate the fan indefinitely; it is particularly useful for refreshing outdoor spaces which are exposed to the sun and/or oppressively hot.

Finally, the operations for conversion from a heating device to a ventilation device are few and very simple, since it is sufficient to close the expansion valve of the cylinder, remove the cylinder from the base body, then remove the heating head and fit the ventilation head, leaving the gas pipe 8 in position in order to allow gas-fired operation after performing the above-described operations in reverse.

It is also possible to bypass the plug 11a and the corresponding socket 11b between the fan and the wire 14 and directly connect the vertical wire 14 to the fan motor. In this case, when the head 10 is applied to the post, said wire 14 is inserted in the post 4 and then the plug 16 is inserted in the socket 17 of the battery.

According to another embodiment, the self-powered ventilation device can be provided with a solar panel 25, as shown in figure 3.

In this embodiment, the fan 11 (figure 3) is again of the DC type and is powered by a set of semiconductor-based photocells which, as is known, form the so-called "solar panel", since they allow to convert solar energy directly into DC electric power.

The rechargeable battery is provided in this case too and allows to power the fan 11 when the intensity of sunlight is insufficient to maintain its normal rotation.

The solar panel 25 can be mounted on a support which can be orientated in various directions, so as to allow the solar panel to be orientated correctly with respect to the inclination of sun rays, which of course varies over time.

According to a further and simpler embodiment, the ventilation device can be provided as shown in figure 4.

In this embodiment, the head 10 has a fan 26 of the single-phase AC type, which is powered directly by means of a wire 27 passing through a post 28 and can be connected to the mains through an external cord 29.

The head 10 is therefore stably coupled to the post 28 and the base support 30 of the post 28 can assume any shape at will.

The practical and economical advantages of the ventilation device according to the present invention are evident from the above description; in particular, said device is advantageous for cooling outdoor spaces such as gardens for restaurant tables, for private terraces and for outdoor spaces used by sitting people, and is also cheap, since its supporting structure can be used, as an alternative, also to heat the same spaces in the in-between seasons.

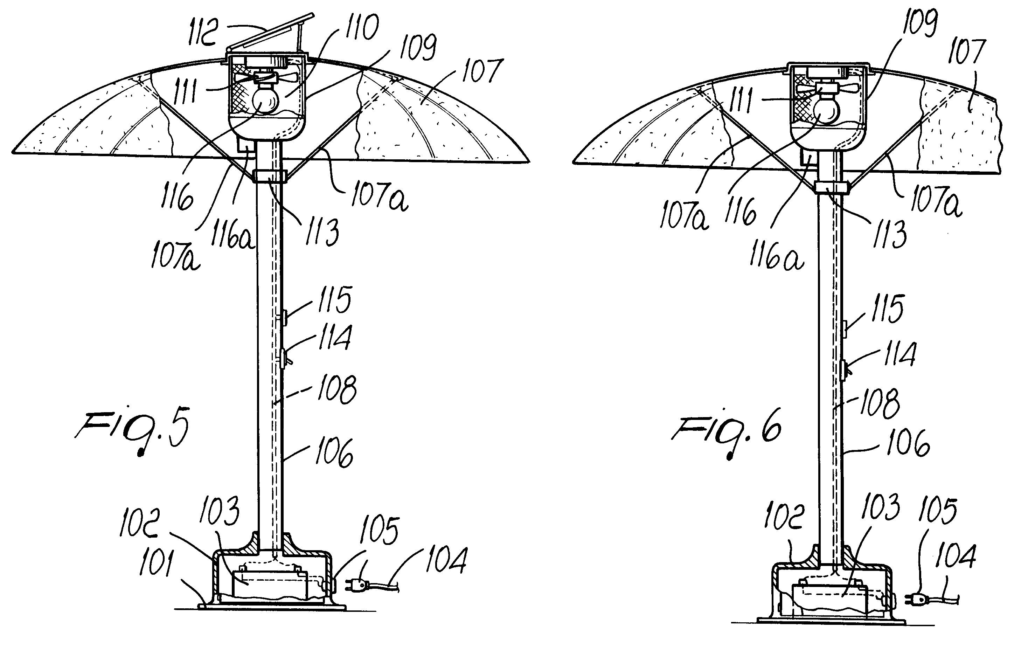

Also according to the present invention and according to other embodiments such as those shown in figures 5, 6 and 7, the ventilation device is associated with conventional fixed or folding sunshades.

More specifically, figure 5 shows a ventilation device constituted by a footing 101 which supports a box-like base body 102 which can be opened and contains an electric battery 103 of the type which can be recharged by means of an electric cord 104 which is connected to the electric mains and is provided with a plug and socket 105 to connect the battery.

A tubular post 106 is vertically associated on the box-like base body 102 and acts as a support for the canopy of the sunshade 107 and as a passage for the electric wire 108.

A cage-shaped body 109 is stably anchored to the end of the post 106 and is peripherally closed by a protective wire gauze 110, inside which there is provided a fan 111 of the multiple-speed DC type, which is electrically connected to the battery 103 by means of said wire 108 located inside the post; said fan 111 is also directly connected to a solar panel 112 which is anchored in an upward region to the cage-like body 109.

A sloping canopy 107 is stably anchored to the peripheral region of the cage-like body 109 and is shaped like the canopy of a conventional sunshade.

In this case, the sunshade is of the fixed type, i.e., it does not fold; all conventional stretchers or rods 107a that support the canopy in the open position are in fact fixed to a sleeve 113 which is rigidly coupled to the tubular post 106.

The ventilation device is also provided with a combined switch and speed variator 114, in order to allow to obtain the chosen fan speed, and with at least one socket 115 which is connected to the internal wire 108 for the connection of household appliances such as a cordless telephone, a radio set, a portable television set and the like. There is also provided a luminaire 116 which is associated with the central body of the fan and there is provided at least one infrared- or violet-radiation device 116a for attracting and destroying various insects, such as mosquitoes, flies and the like.

The device of figure 5 described above allows the fan to turn by means of the direct power supply provided by the solar panel 112 or, when the radiation of the sun is insufficient to generate the electric power consumed by the fan, by means of the power supply provided by the rechargeable battery 103.

The above description clearly shows the undeniable advantage, in terms of comfort, that the fan offers to users both during periods of maximum solar radiation and during evening hours.

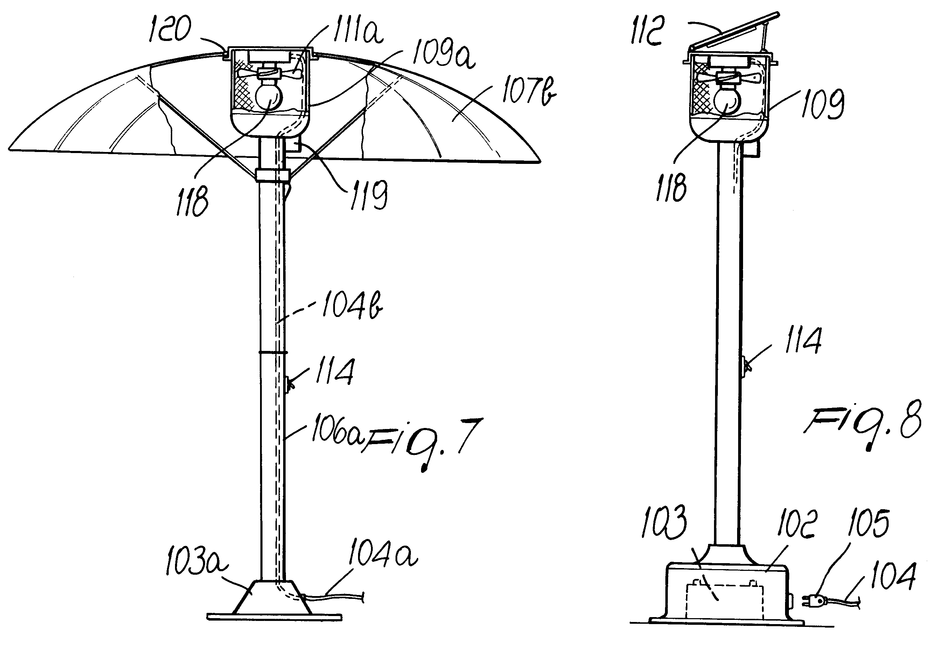

According to another embodiment, shown in figure 6, the ventilation device is constituted substantially like the one of figure 5. In this case only the battery 103 is used and no solar panel is provided; the battery can power the fan at multiple speeds indefinitely, since this is allowed by the automatic recharging of the battery by means of the cord 104.

In this case too, the canopy 107 of the sunshade is fixed, i.e., it cannot be folded against the post (figure 6).

Figure 7 illustrates a different embodiment of the ventilation device according to the present invention.

In this case, the supporting footing 103a can have any shape and be made of any material and can support a hollow cylindrical post 106a, at the top whereof a head 109a is anchored which bears a fan 111a of the single-phase AC type which is powered directly by the mains by means of the external cord 104a and the wire 104b located inside the post.

In this embodiment, the canopy of the sunshade is rotatably mounted about a ring 120 which is associated with the peripheral region of the head 109a so as to allow the closing and folding of the canopy against the post 106a, as in the case of current beach umbrellas.

Moreover, this embodiment again allows to have a lamp 118 and a mosquito control device 119 as in the previous embodiments.

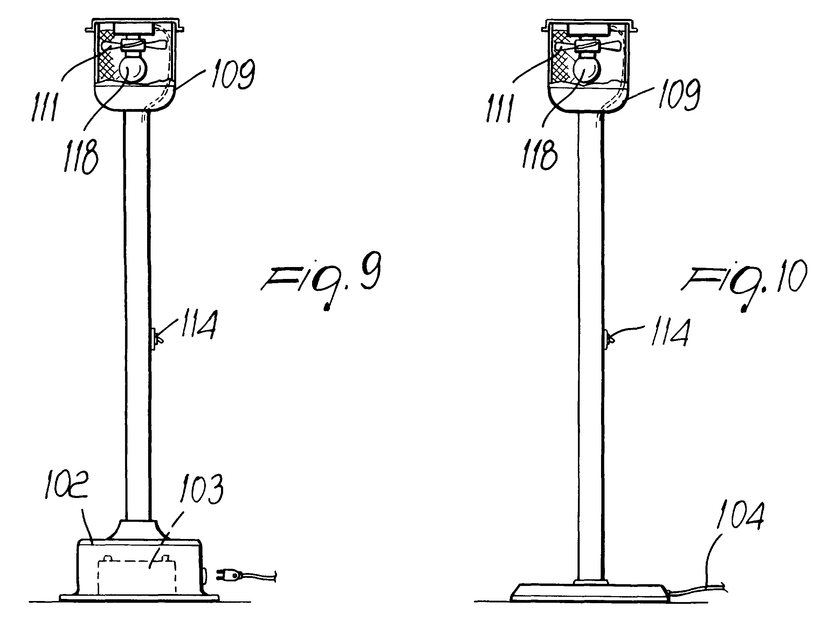

Figures 8, 9 and 10 illustrate the structure of the devices already described in relation to figures 5, 6 and 7 respectively, with the variation that none of them has the solar canopy 107 shaped like a sunshade or the like.

The ventilation devices which are not fitted with a sunshade, are in fact meant to be placed under fixed or roll-up awnings of any kind and size.

In particular, the device of figure 8 is structured like the device of figure 5, i.e., it has an orientatable solar panel 112 and a rechargeable battery 103 and can be used laterally with respect to an awning, so that the solar panel remains exposed to solar radiation: it can also be used, for example, in the evening to produce a ventilation which can reduce the discomfort caused by any oppressively hot air or the reverberation of the heat released from the ground during a sunny day, since the battery can run the fan independently of the solar panel.

The ventilation device of figure 9 is provided only with the battery 103 and therefore can be used under any awning, both during the day and in the evening, while the device of figure 10 has an AC fan which is powered by the electric mains and whose function is the same as the one shown in figures 8 and 9, with the only restriction entailed by the presence of the power cord 104.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A self-powered ventilation device, particularly for outdoor spaces, sunshades, heaters and the like, comprising a base body and a tubular post covered by a covering hood characterized in that it comprises at least one fan of the multiple-speed type, enclosed within a cage-like supporting head which is peripherally provided with a protective wire gauze and with a tubular connection for detachable coupling to the end of said post, said fan having a motor which is powered autonomously.

2. A ventilation device according to claim 1, characterized in that a solar panel is provided associated with said hood to generate DC power to power said fan.

3. A ventilation device according to claim 1, characterized in that a rechargeable battery is located in said base body to generate DC power to power said fan.

4. A ventilation device according to claim 1, characterized in that said fan is of the single-phase AC type, AC power being supplied to the fan by a connection to the electric mains.

5. A ventilation device according to claim 1, characterized in that said head that contains said fan is provided, in an upward region, with a protective hood and, in a downward region, with at least one radiation device for controlling mosquitoes and various insects.

6. A ventilation device according to claim 1, characterized in that a structure for protection against the sun is associated with a peripheral region of said head that encloses said fan and is constituted by a canopy of a fixed or folding sunshade, said head and the corresponding canopy being associated directly with a tubular supporting post.

7. A ventilation device according to claim 1, characterized in that a combined fan switch and speed variator is provided on the tubular post and is associated with magnetic-electric safety fuses.

8. A ventilation device according to claim 1, characterized in that at least one socket is connected to an electric wire located inside the tubular post and is anchored outside said post for the connection of household appliances.

9. A ventilation device according to claim 4, characterized in that a power cord is provided inside said tubular post for connection to the electric mains.

10. A ventilation device according to claim 1, characterized in that at least one luminaire of the incandescent or halogen type or the like is associated with said fan.
